# EUROPEAN PATENT APPLICATION

(11) **EP 4 397 713 A1**
(43) Date of publication of application: **10.07.2024**
(21) Application number: 22865050.3
(22) Date of filing: 31.08.2022
(51) Int. Cl.: C08L 67/04, B29C 49/04

(54) **BIODEGRADABLE RESIN COMPOSITION, BIODEGRADABLE CONTAINER, AND MANUFACTURING METHOD THEREFOR**

(30) Priority: 31.08.2021 KR 20210115989
(71) Applicant: CJ CheilJedang Corporation, Seoul 04560 (KR)
(72) Inventor: MOON, Sang Gwon, Seoul 04560 (KR); CHUNG, Jin Su, Seoul 04560 (KR); YOON, Ki Chull, Seoul 04560 (KR); PARK, Jeung Yil, Seoul 04560 (KR)
(74) Representative: Dehns
(86) International application number: PCT/KR2022/013053
(87) International publication number: WO 2023/033548

(57) **Abstract**

A biodegradable container manufactured from a composition including polyhydroxyalkanoate (PHA) resin with controlled crystallinity is not easily damaged by various impacts applied during manufacturing and distribution, does not react with various chemical components included in cleaners or the like, and is biodegradable in the ocean.

## Description

### Technical Field

The present invention relates to a biodegradable resin composition, to a biodegradable container, and to a process for preparing the same.

### Background Art

As domestic and international travel becomes more active, and as hygiene standards are heightened, the demand for cosmetics or cleansers provided as amenities to guests at hotels or resorts is increasing, and their types are becoming more diverse.

Although it is efficient to use cosmetics or cleansers in large-volume containers in a typical home, hotels and resorts mainly provide them as contained in disposable containers, rather than large-volume containers for multiple uses, since it is difficult to apply a tamper-evident technology for safety reasons as an unspecified number of people use them, and there is also a risk of infectious diseases.

In particular, as it becomes difficult for individuals to travel with cleansers due to aviation security issues, the provision of disposable cleansers is increasing in hotels with a large proportion of foreign guests, and the number of disposable containers that are discarded is also increasing in proportion.

However, disposable containers are very small due to their nature, and it is difficult to attach labels thereto; thus, they are printed directly on the containers. Since various materials are used depending on the uses, it is very difficult to collect and recycle them. Even if they are collected, it is so small that the current recycling sorting system cannot screen them out and recycle them.

Further, due to the small, light, and colorful nature of the containers, if they are discarded and flow into rivers or oceans, marine creatures, such as fish, easily mistake them for food, causing serious environmental problems of their death.

Accordingly, technologies are being developed to reduce environmental pollution caused by the increasing number of packaging materials for disposable products by preparing disposable containers using biodegradable polymer that can be easily biodegraded in soil and sea; thus, when they are properly collected and incinerated, they can be recovered as heat energy and can be easily biodegraded when discarded and exposed to soil or sea.

### [Prior Art Document]

(Patent Document 1) Korean Patent No. 1158487

### Disclosure of Invention

### Technical Problem

As a result of research conducted by the present inventors, as a biodegradable resin comprising a polyhydroxyalkanoate (PHA) resin with controlled crystallinity is adopted in the conventional method of preparing small plastic containers, it has been possible to achieve a container that is not easily damaged by various impacts applied during the preparation and distribution thereof, does not react with various chemical components contained in cleansers, and is biodegradable even in the ocean.

Accordingly, an object of the present invention is to provide a biodegradable resin composition for preparing a container that is biodegradable and has excellent impact resistance, chemical resistance, and water resistance, a biodegradable container using the same, and a process for preparing the same.

### Solution to Problem

According to the present invention, there is provided a biodegradable resin composition for a biodegradable container that comprises a biodegradable resin, wherein the biodegradable resin comprises a polyhydroxyalkanoate (PHA) resin, the polyhydroxyalkanoate (PHA) resin comprises a 4-hydroxybutyrate (4-HB) repeat unit, and the biodegradable resin composition has a melt flow index of 1.0 g/10 minutes or more when measured at 165°C.

In addition, according to the present invention, there is provided a biodegradable container that comprises a biodegradable resin, wherein the biodegradable resin comprises a polyhydroxyalkanoate (PHA) resin, the polyhydroxyalkanoate (PHA) resin comprises a 4-hydroxybutyrate (4-HB) repeat unit, and the biodegradable container has a compressive strength of 5 kgf/cm² or more.

In addition, according to the present invention, there is provided a process for preparing a biodegradable container that comprises preparing a biodegradable resin composition comprising a biodegradable resin and having a melt flow index of 1.0 g/10 minutes or more when measured at 165°C; and molding a container from the biodegradable resin composition, wherein the biodegradable resin comprises a polyhydroxyalkanoate (PHA) resin, and the polyhydroxyalkanoate (PHA) resin comprises a 4-hydroxybutyrate (4-HB) repeat unit.

### Advantageous Effects of Invention

As the biodegradable resin composition according to the present invention comprises a biodegradable resin comprising a polyhydroxyalkanoate (PHA) resin with controlled crystallinity, a container prepared therefrom is not easily damaged by various impacts applied during the preparation and distribution thereof, does not react with various chemical components contained in cleansers, and is biodegradable even in the ocean.

In addition, as the copolymerization components in the PHA resin are adjusted, or other widely used biodegradable materials such as PLA, PBAT, and PBS are mixed, biodegradability, which was limited to specific conditions in conventional biodegradable products, can be improved, and physical properties suitable for various applications can be implemented.

In addition, the biodegradable resin composition of the present invention can be prepared into a biodegradable container using a well-known method such as blow molding, which has been conventionally used to prepare small plastic containers.

### Brief Description of Drawings

Fig. 1 shows a biodegradable container according to an embodiment and a cross-sectional view of its side wall.
Fig. 2 shows a cross-sectional view of the side wall of a biodegradable container according to another embodiment.
Fig. 3 shows a cross-sectional view of the side wall of a biodegradable container according to still another embodiment.
Fig. 4 shows a process for preparing a biodegradable container according to an embodiment using extrusion blow molding.
Fig. 5 shows a process for preparing a biodegradable container according to another embodiment using injection stretch blow molding.

### <Explanation of Reference Numerals>

10: biodegradable container, 10a: side wall, 11: parison, 20: mold, 30: extruder, 40: die head, 41: blow pin, 42: core rod, 50: compressed air, 100: first layer, 200: second layer, 300: third layer.

### Best Mode for Carrying out the Invention

Hereinafter, various embodiments and examples of the present invention will be described in detail by referring to the drawings.

In the description of the present invention, if it is determined that a detailed description of a relevant known constitution or function may obscure the subject matter of the present invention, the detailed description thereof will be omitted. In addition, the sizes of individual elements in the drawings may be exaggeratedly depicted or omitted for the sake of description, and they may differ from the actual sizes.

In the present specification, when one component is described to be formed on/under another component or connected or coupled to each other, it covers the cases where these components are directly or indirectly formed, connected, or coupled through another component. In addition, it should be understood that the criterion for the terms on and under of each component may vary depending on the direction in which the object is observed.

In this specification, terms referring to the respective components are used to distinguish them from each other and are not intended to limit the scope of the present invention. In addition, in the present specification, a singular expression is interpreted to cover a plural number as well unless otherwise specified in the context.

In the present specification, the term "comprising" is intended to specify a particular characteristic, region, step, process, element, and/or component. It does not exclude the presence or addition of any other characteristic, region, step, process, element and/or component, unless specifically stated to the contrary.

In the present specification, the terms first, second, and the like are used to describe various components. But the components should not be limited by the terms. The terms are used for the purpose of distinguishing one element from another.

The biodegradable container according to an embodiment of the present invention and the biodegradable resin composition therefor each comprise a biodegradable resin, wherein the biodegradable resin comprises a polyhydroxyalkanoate (PHA) resin, and the polyhydroxyalkanoate (PHA) resin comprises a 4-hydroxybutyrate (4-HB) repeat unit.

As the biodegradable container according to an embodiment of the present invention is prepared from a biodegradable resin composition comprising a biodegradable resin comprising a polyhydroxyalkanoate (PHA) resin with controlled crystallinity, it is not easily damaged by various impacts applied during the preparation and distribution thereof, does not react with various chemical components contained in cleansers, and is biodegradable even in the ocean.

### Polyhydroxyalkanoate (PHA) resin

The polyhydroxyalkanoate (PHA) resin may have physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibits excellent biodegradability, and is excellent in biocompatibility.

Specifically, the PHA resin is a natural polyester polymer that accumulates in microbial cells. Since it is a biodegradable material, it can be composted and finally decomposed into carbon dioxide, water, and organic waste without generating toxic residue. In particular, the PHA resin is biodegradable in soil and sea. Thus, when the biodegradable resin composition comprises the PHA resin, it is biodegradable under any environmental conditions, such as soil and sea, and has environmentally friendly characteristics. Thus, an article formed using the biodegradable resin composition comprising the PHA resin can be used in various fields as an environmentally friendly article.

The PHA resin may be formed by an enzyme-catalyzed polymerization of one or more monomer repeat units in living cells.

The PHA resin may be a polyhydroxyalkanoate (PHA) copolymer resin, specifically, a copolymer comprising two or more different repeat units with the different repeat units randomly distributed in the polymer chain.

Examples of repeat units that may be contained in the PHA resin include 2-hydroxybutyrate, lactic acid, glycolic acid, 3-hydroxybutyrate (3-HB), 3-hydroxypropionate (3-HP), 3-hydroxyvalerate (3-HV), 3-hydroxyhexanoate (3-HH), 3-hydroxyheptanoate (3-HHep), 3-hydroxyoctanoate (3-HO), 3-hydroxynonanoate (3-HN), 3-hydroxydecanoate (3-HD), 3-hydroxydodecanoate (3-HDd), 4-hydroxybutyrate (4-HB), 4-hydroxyvalerate (4-HV), 5-hydroxyvalerate (5-HV), and 6-hydroxyhexanoate (6-HH). The PHA resin may comprise one or more repeat units selected from the above.

Specifically, the PHA resin may comprise one or more repeat units selected from the group consisting of 3-HB, 4-HB, 3-HP, 3-HH, 3-HV, 4-HV, 5-HV, and 6-HH.

According to an embodiment of the present invention, the PHA resin may be a PHA copolymer comprising a 4-HB repeat unit.

In addition, the PHA resin may comprise isomers. For example, the PHA resin may comprise structural isomers, enantiomers, or geometric isomers. Specifically, the PHA resin may comprise structural isomers.

In addition, the PHA resin may be a PHA copolymer that comprises a 4-HB repeat unit and further comprises one repeat unit different from the 4-HB repeat unit, or further comprises two, three, four, five, six, or more repeat units different from each other.

According to an embodiment of the present invention, the PHA resin may comprise a PHA copolymer resin that further comprises one or more repeat units selected from the group consisting of 3-HB, 3-HP, 3-HV, 3-HH, 4-HV, 5-HV, and 6-HH, while comprising a 4-hydroxybutyrate (4-HB) repeat unit.

Specifically, the PHA resin may comprise a PHA copolymer resin comprising a 3-HB repeat unit and a 4-HB repeat unit. For example, the PHA resin may be poly-3-hydroxybutyrate-co-4-hydroxybutyrate (3HB-co-4HB).

According to an embodiment of the present invention, it is important to adjust the content of the 4-HB repeat unit in the PHA copolymer.

That is, in order to achieve the physical properties desired in the present invention, in particular, to increase the biodegradability in soil and sea and to achieve excellent physical properties such as enhanced optical properties, thermal properties, and mechanical properties, the content of the 4-HB repeat unit in the PHA copolymer may be important.

More specifically, the PHA copolymer resin may comprise a 4-HB repeat unit in an amount of 0.1% by weight to 60% by weight based on the total weight of the PHA copolymer resin. For example, the content of the 4-HB repeat unit may be 0.1% by weight to 55% by weight, 0.5% by weight to 60% by weight, 0.5% by weight to 55% by weight, 1% by weight to 60% by weight, 1% by weight to 55% by weight, 1% by weight to 50% by weight, 2% by weight to 55% by weight, 3% by weight to 55% by weight, 3% by weight to 50% by weight, 5% by weight to 55% by weight, 5% by weight to 50% by weight, 10% by weight to 55% by weight, 10% by weight to 50% by weight, 1% by weight to 40% by weight, 1% by weight to 30% by weight, 1% by weight to 29% by weight, 1% by weight to 25% by weight, 1% by weight to 24% by weight, 2% by weight to 20% by weight, 2% by weight to 23% by weight, 3% by weight to 20% by weight, 3% by weight to 15% by weight, 4% by weight to 18% by weight, 5% by weight to 15% by weight, 8% by weight to 12% by weight, 9% by weight to 12% by weight, 15% by weight to 55% by weight, 15% by weight to 50% by weight, 20% by weight to 55% by weight, 20% by weight to 50% by weight, 25% by weight to 55% by weight, 25% by weight to 50% by weight, 35% by weight to 60% by weight, 40% by weight to 55% by weight, or 45% by weight to 55% by weight, based on the total weight of the PHA copolymer.

For example, the PHA copolymer resin may comprise a 4-HB repeat unit in an amount of 0.1% by weight or more, 5% by weight or more, 10% by weight or more, 12% by weight or more, 13% by weight or more, 15% by weight or more, 17% by weight or more, 18% by weight or more, 20% by weight or more, or 25% by weight or more, and 60% by weight or less, 55% by weight or less, 50% by weight or less, 45% by weight or less, 43% by weight or less, 42% by weight or less, 40% by weight or less, or 35% by weight or less, based on the total weight of the PHA copolymer, but it is not limited thereto. If the content of the 4-HB repeat unit satisfies the above range, the biodegradability in soil and sea may be increased, excellent optical properties may be maintained, the thermal properties of a material may be improved, and mechanical properties such as flexibility and strength may be further enhanced.

In addition, the PHA resin comprises at least one or more of a 4-HB repeat unit, and the content of the 4-HB repeat unit may be controlled to adjust the crystallinity of the PHA resin. That is, the PHA resin may be a PHA copolymer with controlled crystallinity.

The PHA resin whose crystallinity is adjusted may be one in which its crystallinity and amorphousness are adjusted as the irregularities are increased in its molecular structure. Specifically, the types and ratios of the monomers or the types and/or contents of the isomers may be adjusted.

The PHA resin may comprise a combination of two or more PHA resins having different crystallinities. That is, the PHA resin may be adjusted to have the content of a 4-HB repeat unit in the specific range by mixing two or more types of PHA resins having different crystallinities.

For example, the PHA resin comprises a mixed resin of a first PHA resin and a second PHA resin having different contents of a 4-HB repeat unit, and the PHA resin may be adjusted such that the content of a 4-HB repeat unit is 0.1% by weight to 60% by weight based on the total weight of the PHA resin. Specific characteristics of the first PHA resin and the second PHA resin are described below.

Meanwhile, the PHA copolymer resin may comprise a 3-HB repeat unit in an amount of 20% by weight or more, 35% by weight or more, 40% by weight or more, 50% by weight or more, 60% by weight or more, 70% by weight or more, or 75% by weight or more, and 99% by weight or less, 98% by weight or less, 97% by weight or less, 96% by weight or less, 95% by weight or less, 93% by weight or less, 91% by weight or less, 90% by weight or less, 80% by weight or less, 70% by weight or less, 60% by weight or less, or 55% by weight or less, based on the total weight of the PHA copolymer resin.

Meanwhile, the PHA resin may have a glass transition temperature (Tg) of, for example, -45°C to 80°C, -35°C to 80°C, -30°C to 80°C, -25°C to 75°C, -20°C to 70°C, - 35°C to 5°C, -25°C to 5°C, -35°C to 0°C, -25°C to 0°C, -30°C to -10°C, -35°C to -15°C, - 35°C to -20°C, -20°C to 0°C, -15°C to 0°C, or -15°C to -5°C.

The crystallization temperature (Tc) of the PHA resin, for example, may not be measured or may be, for example, 70°C to 120°C, 75°C to 120°C, 75°C to 115°C, 75°C to 110°C, or 90°C to 110°C.

The melting temperature (Tm) of the PHA resin, for example, may not be measured or may be, for example, 100°C to 170°C, for example, 110°C to 150°C, or, for example, 120°C to 140°C.

The PHA resin may have a weight average molecular weight (Mw) of, for example, 10,000 g/mole to 1,200,000 g/mole. For example, the weight average molecular weight of the PHA resin may be 50,000 g/mole to 1,200,000 g/mole, 100,000 g/mole to 1,200,000 g/mole, 50,000 g/mole to 1,000,000 g/mole, 100,000 g/mole to 1,000,000 g/mole, 100,000 g/mole to 900,000 g/mole, 200,000 g/mole to 1,200,000 g/mole, 250,000 g/mole to 1,150,000 g/mole, 300,000 g/mole to 1,100,000 g/mole, 350,000 g/mole to 1,000,000 g/mole, 350,000 g/mole to 950,000 g/mole, 100,000 g/mole to 900,000 g/mole, 200,000 g/mole to 800,000 g/mole, 200,000 g/mole to 700,000 g/mole, 250,000 g/mole to 650,000 g/mole, 200,000 g/mole to 400,000 g/mole, 300,000 g/mole to 800,000 g/mole, 300,000 g/mole to 600,000 g/mole, 400,000 g/mole to 800,000 g/mole, 500,000 g/mole to 1,200,000 g/mole, 500,000 g/mole to 1,000,000 g/mole 550,000 g/mole to 1,050,000 g/mole, 550,000 g/mole to 900,000 g/mole, or 600,000 g/mole to 900,000 g/mole.

The PHA resin may comprise a first PHA resin, a second PHA resin, or a mixed resin of the first PHA resin and the second PHA resin.

The first PHA resin and the second PHA resin may be distinguished in terms of the content of a 4-HB repeat unit, glass transition temperature (Tg), crystallization temperature (Tc), and melting temperature (Tm).

Specifically, the first PHA may comprise a 4-HB repeat unit in an amount of, for example, 15% by weight to 60% by weight, 15% by weight to 55% by weight, 20% by weight to 55% by weight, 25% by weight to 55% by weight, 30% by weight to 55% by weight, 35% by weight to 55% by weight, 20% by weight to 50% by weight, 25% by weight to 50% by weight, 30% by weight to 50% by weight, 35% by weight to 50% by weight, or 20% by weight to 40% by weight.

The glass transition temperature (Tg) of the first PHA resin may be, for example, -45°C to -10°C, -35°C to -10°C, -35°C to -15°C, -35°C to -20°C, or -30°C to -20°C.

The crystallization temperature (Tc) of the first PHA resin, for example, may not be measured or may be, for example, 60°C to 120°C, 60°C to 110°C, 70°C to 120°C, or 75°C to 115°C.

The melting temperature (Tm) of the first PHA resin, for example, may not be measured or may be, for example, 100°C to 170°C, 100°C to 160°C, 110°C to 160°C, or 120°C to 150°C.

The first PHA resin may have a weight average molecular weight (Mw) of, for example, 10,000 g/mole to 1,200,000 g/mole, 10,000 g/mole to 1,000,000 g/mole, 50,000 g/mole to 1,000,000 g/mole, 200,000 g/mole to 1,200,000 g/mole, 300,000 g/mole to 1,000,000 g/mole, 100,000 g/mole to 900,000 g/mole, 500,000 g/mole to 900,000 g/mole, 200,000 g/mole to 800,000 g/mole, or 200,000 g/mole to 400,000 g/mole.

Meanwhile, the second PHA resin may comprise a 4-HB repeat unit in an amount of 0.1% by weight to 30% by weight. For example, the second PHA resin may comprise a 4-HB repeat unit in an amount of, for example, 0.1% by weight to 30% by weight, 0.5% by weight to 30% by weight, 1% by weight to 30% by weight, 3% by weight to 30% by weight, 1% by weight to 28% by weight, 1% by weight to 25% by weight, 1% by weight to 24% by weight, 1% by weight to 20% by weight, 1% by weight to 15% by weight, 2% by weight to 25% by weight, 3% by weight to 25% by weight, 3% by weight to 24% by weight, 5% by weight to 24% by weight, 5% by weight to 20% by weight, greater than 5% by weight to less than 20% by weight, 7% by weight to 20% by weight, 10% by weight to 20% by weight, 15% by weight to 25% by weight, or 15% by weight to 24% by weight.

The first PHA resin and the second PHA resin may be different from each other in terms of the content of a 4-HB repeat unit.

The glass transition temperature (Tg) of the second PHA resin may be, for example, -30°C to 80°C, for example, -30°C to 10°C, for example, -25°C to 5°C, for example, -25°C to 0°C, for example, -20°C to 0°C, or, for example, -15°C to 0°C.

The glass transition temperature (Tg) of the first PHA resin and the glass transition temperature (Tg) of the second PHA resin may be different from each other.

The second PHA resin may have a crystallization temperature (Tc) of, for example, 70°C to 120°C, for example, 75°C to 115°C, or, for example, may not be measured.

The second PHA resin may have a melting temperature (Tm) of, for example, 100°C to 170°C, for example, 105°C to 165°C, for example, 110°C to 160°C, for example, 100°C to 150°C, for example, 115°C to 155°C, or, for example, 120°C to 150°C.

The second PHA resin may have a weight average molecular weight (Mw) of 10,000 g/mole to 1,200,000 g/mole, 50,000 g/mole to 1,100,000 g/mole, 100,000 g/mole to 1,000,000 g/mole, 300,000 g/mole to 1,000,000 g/mole, 100,000 g/mole to 900,000 g/mole, 200,000 g/mole to 800,000 g/mole, 200,000 g/mole to 600,000 g/mole, 200,000 g/mole to 400,000 g/mole, or 400,000 g/mole to 700,000 g/mole.

Specifically, the first PHA resin has a glass transition temperature (Tg) of -35°C to -15°C, the second PHA resin satisfies at least one characteristic selected from a glass transition temperature (Tg) of -15°C to 0°C, a crystallization temperature (Tc) of 80°C to 110°C, and a melting temperature (Tm) of 120°C to 160°C, and the glass transition temperature (Tg) of the first PHA resin and the glass transition temperature (Tg) of the second PHA resin may be different from each other. In addition, the crystallization temperature (Tc) and melting temperature (Tm) of the first PHA resin may not be measured.

If the first PHA resin and the second PHA resin each satisfy at least one of the content of a 4-HB repeat unit, glass transition temperature (Tg), crystallization temperature (Tc), and melting temperature (Tm) in the above ranges, it may be more advantageous for achieving the effect desired in the present invention.

In addition, the first PHA resin and the second PHA resin may each be a PHA resin whose crystallinity is adjusted.

For example, the first PHA resin may comprise an amorphous PHA resin (hereinafter, referred to as an aPHA resin), and the second PHA resin may comprise a semi-crystalline PHA resin (hereinafter, referred to as an scPHA resin).

The aPHA resin and the scPHA resin may be distinguished in terms of the content of a 4-HB repeat unit, glass transition temperature (Tg), crystallization temperature (Tc), melting temperature (Tm), or the like.

The aPHA resin may comprise a 4-HB repeat unit in an amount of, for example, 25 to 50% by weight based on the total weight of the PHA resin.

The aPHA resin may have a glass transition temperature (Tg) of, for example, - 35°C to -20°C.

The crystallization temperature (Tc) of the aPHA resin may not be measured.

The melting temperature (Tm) of the aPHA resin may not be measured.

The scPHA resin may comprise a 4-HB repeat unit in an amount of, for example, 1 to less than 25% by weight based on the total weight of the PHA resin.

The scPHA resin may have a glass transition temperature (Tg) of -20°C to 0°C.

The scPHA resin may have a crystallization temperature (Tc) of 75°C to 115°C.

The scPHA resin may have a melting temperature (Tm) of 110°C to 160°C.

Meanwhile, in order to accomplish the effect according to an embodiment of the present invention, the content of the PHA resin contained in the biodegradable resin is important.

The biodegradable resin may comprise the PHA resin in an amount of 40 to 99% by weight based on the total weight of the biodegradable resin. For example, it may be employed in an amount of 50% by weight to 95% by weight, 40% by weight to 80% by weight, 40% by weight or more, 50% by weight or more, 55% by weight or more, 60% by weight or more, 65% by weight or more, or 70% by weight or more, and 99% by weight or less, 95% by weight or less, 90% by weight or less, 85% by weight or less, or 80% by weight or less.

Meanwhile, when the PHA resin comprises the first PHA resin, it may be employed in an amount of, for example, 1% to 95% by weight. If the first PHA resin is used alone, the first PHA resin may be employed in an amount of, for example, 5 to 80% by weight based on the total weight of the biodegradable resin. Specifically, the first PHA resin may be employed in an amount of 10% by weight or more and 50% by weight or less.

As another example, if the first PHA resin is mixed with the second PHA resin to be used, the first PHA resin may be employed in an amount of, for example, 1 to 50% by weight, for example, 10 to 50% by weight, 20 to 50% by weight, or 30 to 50% by weight.

When the PHA resin comprises the second PHA resin, it may be employed in an amount of, for example, 1% to 95% by weight. If the second PHA resin is used alone, the second PHA resin may be employed in an amount of, for example, 50 to 95% by weight based on the total weight of the biodegradable resin. Specifically, the second PHA resin may be employed in an amount of 50% by weight or more, 55% by weight or more, 60% by weight or more, 65% by weight or more, or 70% by weight or more, and 95% by weight or less, 90% by weight or less, 85% by weight or less, or 80% by weight or less.

As another example, if the second PHA resin is mixed with the first PHA resin to be used, the second PHA resin may be employed in an amount of, for example, 20 to 80% by weight, 30 to 70% by weight, or 50 to 70% by weight.

According to another embodiment of the present invention, when the PHA resin comprises a mixed resin of the first PHA resin and the second PHA resin, the weight ratio of the first PHA resin to the second PHA resin may be, for example, 1:0.05 to 5, for example, 1:0.5 to 4, or, for example, 1: 1.2 to 4.

If the content of the PHA resin, or the content of each of the first PHA resin and the second PHA resin, and their content ratio each satisfy the above ranges, optical properties, thermal properties, and mechanical properties can be further enhanced, and moldability, processability, and productivity can also be enhanced when a biodegradable article is produced.

As the biodegradable resin composition according to the present invention comprises a polyhydroxyalkanoate (PHA) resin, whose crystallinity has been adjusted, it may have physical properties suitable for a molding process.

According to an embodiment, the biodegradable resin composition comprises a biodegradable resin, wherein the biodegradable resin comprises a polyhydroxyalkanoate (PHA) resin, the polyhydroxyalkanoate (PHA) resin comprises a 4-hydroxybutyrate (4-HB) repeat unit, and the biodegradable resin composition has a melt flow index of 1.0 g/10 minutes or more when measured at 165°C. For example, the biodegradable resin composition may have a melt flow index of 1.0 g/10 minutes or more, 1.5 g/10 minutes or more, or 2.0 g/10 minutes or more, and 5.0 g/10 minutes or less, 4.0 g/10 minutes or less, 3.0 g/10 minutes or less, or 2.5 g/10 minutes or less, when measured at 165°C. Specifically, the biodegradable resin composition may have a melt flow index of 1.0 g/10 minutes to 3.0 g/10 minutes when measured at 165°C. Within the above preferred range, it has an appropriate melt viscosity for forming a container without imposing a load on the extruder or impairing productivity, making it more advantageous for obtaining a uniform thickness area by area.

As a specific example, the biodegradable resin may be composed of a polyhydroxyalkanoate (PHA) resin alone.

According to another embodiment, the biodegradable resin further comprises at least one of a polylactic acid (PLA) resin and a polybutylene succinate (PBS) resin. Specifically, the biodegradable resin may comprise a resin in which (a) the polyhydroxyalkanoate (PHA) resin and (b) at least one of the polylactic acid (PLA) resin and the polybutylene succinate (PBS) resin is blended at a weight ratio (a:b) of 1:0.1 to 1:2.3. For example, the blend weight ratio (a:b) may be in the range of 1:0.1 to 1:1.0, 1:0.1 to 1:0.7, 1:0.3 to 1: 1.0, 1:0.3 to 1:0.7, 1:0.1 to 1:0.5, 1:1.0 to 1:2.3, 1:1.0 to 1:2.0, 1:1.0 to 1:1.5, 1:1.2 to 1:2.3, or 1:1.5 to 1:2.3, but it is not limited thereto.

### Characteristics of the biodegradable container

A biodegradable container comprising the biodegradable resin composition according to an embodiment is excellent in mechanical properties.

In particular, as the biodegradable container comprises a polyhydroxyalkanoate (PHA) resin with controlled crystallinity, it may be excellent in impact resistance.

For example, the biodegradable container may not be broken when freely dropped from a height of 1 m at 0°C. Further, the biodegradable container may not be damaged when freely dropped from a height of 1.6 m at 0°C. Since 1 m corresponds to the waist height of an adult male, and 1.6 m corresponds to the chest height, the biodegradable container may not be easily broken or damaged even if accidentally dropped during use.

According to an embodiment, the biodegradable container has a compressive strength of 5 kgf/cm² or more. For example, the compressive strength of the biodegradable container may be 5 kgf/cm² or more, 7 kgf/cm² or more, or 10 kgf/cm² or more. In addition, the compressive strength of the biodegradable container may be 30 kgf/cm² or less, 20 kgf/cm² or less, 17 kgf/cm² or less, or 15 kgf/cm² or less. As an example, the biodegradable container may have a compressive strength of less than 14 kgf/cm² or more. As another example, the biodegradable container may have a compressive strength of 5 kgf/cm² to less than 14 kgf/cm² or more. Within the above range, when products are distributed as stacked on pallets, they can effectively withstand the pressure applied thereto, while it is possible to prevent an increase in material costs and process costs that may be otherwise caused by excessively thick containers. The compressive strength may be measured as the strength until it is crushed when pressure is applied to the biodegradable container using Instron's universal testing machine (UTM).

In addition, the biodegradable container according to an embodiment may have an appropriate level of permeability to moisture and oxygen.

The biodegradable container may have a moisture permeability (WVTR) of 40 g/m²·atm·day or less, 35 g/m²·atm·day or less, or 30 g/m²·atm·day or less, and 0 g/m²·atm·day or more, 5 g/m²·atm·day or more, 10 g/m²·atm·day or more, 15 g/m²·atm·day or more, or 20 g/m²·atm·day or more, when measured at 38 ± 0.5°C, 90 ± 2% relative humidity, and 1 atm. As a specific example, the biodegradable container may have a moisture permeability of 10 g/m²·atm·day to 30 g/m²·atm·day when measured at 38 ± 0.5°C, 90 ± 2% relative humidity, and 1 atm. The moisture permeability may be measured using a moisture permeability meter (e.g., Aquatran of MOCON).

In addition, the biodegradable container may have an oxygen permeability (OTR) of 50 cc/m²·atm·day or less, 45 cc/m²·atm·day or less, 40 cc/m²·atm·day or less, or 35 cc/m²·atm·day or less, and 0 cc/m²·atm·day or more, 5 cc/m²·atm·day or more, 10 cc/m²·atm·day or more, 15 cc/m²·atm·day or more, or 20 cc/m²·atm·day or more, when measured at 23 ± 0.5°C and 1 atm. As a specific example, the biodegradable container may have an oxygen permeability of 15 cc/m²·atm·day to 40 cc/m²·atm·day when measured at 23 ± 0.5°C and 1 atm. The oxygen permeability may be measured using an oxygen permeability meter (e.g., Oxtran of MOCON).

In addition, the biodegradable container may have excellent optical properties. Specifically, the biodegradable container may have a haze of 10% or less, 9% or less, 8% or less, 7% or less, 6% or less, or 5% or less. In addition, the biodegradable container may have a light transmittance of 80% or more, 90% or more, 92% or more, or 93% or more.

In addition, as the container according to an embodiment is composed of a biodegradable resin, it can be biodegraded by any one of microorganisms, moisture, oxygen, light, and heat. For example, the biodegradable container may have a biodegradability of 90% or more in soil and sea. The biodegradability indicates the rate of decomposition as compared with the standard material (e.g., cellulose) in the same period. The Ministry of Environment of Korea defines a biodegradable material whose biodegradability is 90% or higher as compared with the standard material. Specifically, the marine biodegradability measured according to the EL 724 standard is 90% or more.

The shape of the biodegradable container is not particularly limited; however, for example, it may have the shape of a bottle with a circular or polygonal bottom, and the height may be small, for example, 30 cm or less or 15 cm or less.

The biodegradable container described above can be used as cosmetic containers, cleanser containers, face wash containers, shampoo containers, rinse containers, body cleanser containers, hotel amenity containers, or disposable containers.

### Configuration of the biodegradable container

The biodegradable container according to an embodiment comprises a polyhydroxyalkanoate (PHA) resin as a biodegradable resin. For example, it may comprise a PHA resin in an amount of 80% by weight or more, 85% by weight or more, 90% by weight or more, or 95% by weight or more. As a specific example, the biodegradable container may comprise 100% by weight of a polyhydroxyalkanoate (PHA) resin as a biodegradable resin.

In addition, the biodegradable container may be prepared from a biodegradable resin in which conventional biodegradable materials widely used are further employed in addition to the polyhydroxyalkanoate (PHA) resin. In particular, a polyhydroxyalkanoate (PHA) resin can be stably blended with widely-used biodegradable materials such as polylactic acid (PLA), polybutylene adipate-co-terephthalate (PBAT), and polybutylene succinate (PBS). Thus, as it effectively improves the biodegradability characteristics of conventional materials that can be biodegraded only under certain conditions, such as industrial biodegradation or soil biodegradation, the base of biodegradable materials can be expanded to various uses.

For example, the biodegradable resin may further comprise at least one resin selected from the group consisting of a polylactic acid (PLA) resin, a polybutylene succinate (PBS) resin, and a polybutylene adipate-co-terephthalate (PBAT) resin, in addition to the polyhydroxyalkanoate (PHA) resin.

Specifically, the biodegradable resin may further comprise at least one of a polylactic acid (PLA) resin and a polybutylene succinate (PBS) resin.

As a specific example, the biodegradable resin may comprise a resin in which (a) the polyhydroxyalkanoate (PHA) resin and (b) at least one of the polylactic acid (PLA) resin and the polybutylene succinate (PBS) resin is blended at a weight ratio (a:b) of 1:0.1 to 1:2.3. More specifically, the blend weight ratio (a:b) may be in the range of 1:0.1 to 1:1.0, 1:0.1 to 1:0.7, 1:0.3 to 1:1.0, 1:0.3 to 1:0.7, 1:0.1 to 1:0.5, 1:1.0 to 1:2.3, 1:1.0 to 1:2.0, 1:1.0 to 1:1.5, 1:1.2 to 1:2.3, or 1:1.5 to 1:2.3.

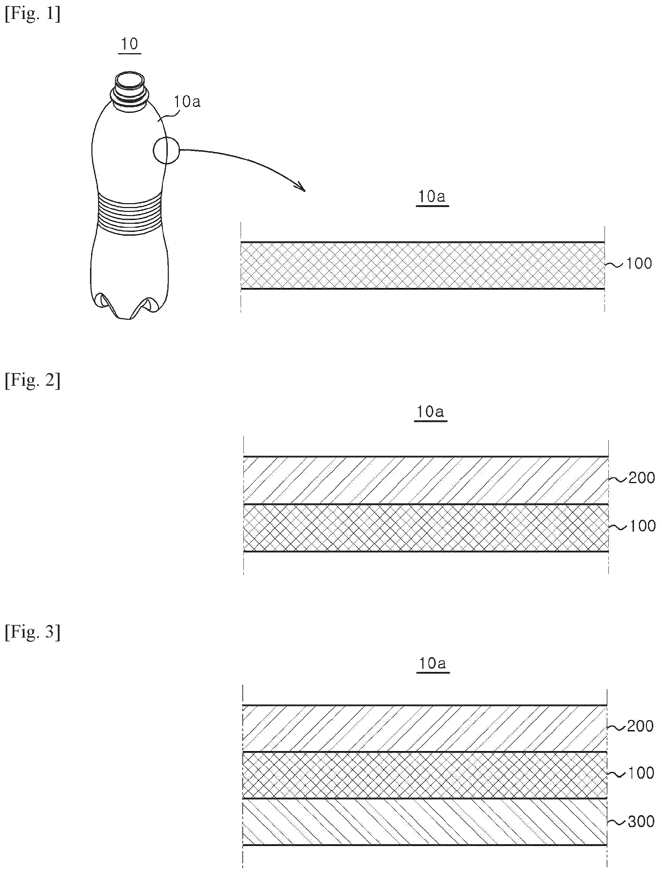

Fig. 1 shows a biodegradable container according to an embodiment and a cross-sectional view of its side wall.

Referring to Fig. 1, the biodegradable container (1) may have a thickness of the side wall (10a) of 0.5 mm or more, 0.8 mm or more, 1 mm or more, 1.5 mm or more, or 2 mm or more, and 5 mm or less, 4 mm or less, 3 mm or less, or 2.5 mm or less. Specifically, the biodegradable container may have a thickness of the side wall of 0.8 mm to 3 mm.

The side wall of the biodegradable container comprises a polyhydroxyalkanoate (PHA) resin and may be composed of a single layer or multiple layers.

Referring to Fig. 1, the side wall (10a) of the biodegradable container (1) may comprise a first layer (100).

The first layer (100) may comprise a polyhydroxyalkanoate (PHA) resin. For example, the first layer may be composed of a polyhydroxyalkanoate (PHA) resin, or it may further comprise at least one resin selected from the group consisting of a polylactic acid (PLA) resin, a polybutylene succinate (PBS) resin, and a polybutylene adipate-co-terephthalate (PBAT) resin, in addition to the polyhydroxyalkanoate (PHA) resin.

The polyhydroxyalkanoate (PHA) resin contained in the first layer may comprise a 3-hydroxybutyrate (3-HB) repeat unit. In addition, the polyhydroxyalkanoate (PHA) resin contained in the first layer may comprise a 4-hydroxybutyrate (4-HB) repeat unit.

The polyhydroxyalkanoate (PHA) resin contained in the first layer may be a homopolymer resin or a copolymer resin. For example, the polyhydroxyalkanoate (PHA) resin contained in the first layer may be a polyhydroxyalkanoate (PHA) copolymer resin comprising a 4-hydroxybutyrate (4-HB) repeat unit. More specifically, the polyhydroxyalkanoate (PHA) resin contained in the first layer may be a polyhydroxyalkanoate (PHA) copolymer resin comprising a 3-hydroxybutyrate (3-HB) repeat unit and a 4-hydroxybutyrate (4-HB) repeat unit.

Specifically, the polyhydroxyalkanoate (PHA) copolymer resin contained in the first layer may comprise a 4-hydroxybutyrate (4-HB) repeat unit in an amount of 0.1% by weight to 60% by weight, or 10% by weight to 50% by weight, based on the total weight of the polyhydroxyalkanoate (PHA) copolymer resin. For example, the content of a 4-hydroxybutyrate (4-HB) repeat unit in the polyhydroxyalkanoate (PHA) copolymer resin may be 0.1% by weight to 55% by weight, 0.5% by weight to 60% by weight, 0.5% by weight to 55% by weight, 1% by weight to 60% by weight, 1% by weight to 55% by weight, 1% by weight to 50% by weight, 2% by weight to 55% by weight, 3% by weight to 55% by weight, 3% by weight to 50% by weight, 5% by weight to 55% by weight, 5% by weight to 50% by weight, 10% by weight to 55% by weight, 10% by weight to 50% by weight, 1% by weight to 40% by weight, 1% by weight to 30% by weight, 1% by weight to 29% by weight, 1% by weight to 25% by weight, 1% by weight to 24% by weight, 2% by weight to 20% by weight, 2% by weight to 23% by weight, 3% by weight to 20% by weight, 3% by weight to 15% by weight, 4% by weight to 18% by weight, 5% by weight to 15% by weight, 8% by weight to 12% by weight, 9% by weight to 12% by weight, 15% by weight to 55% by weight, 15% by weight to 50% by weight, 20% by weight to 55% by weight, 20% by weight to 50% by weight, 25% by weight to 55% by weight, 25% by weight to 50% by weight, 35% by weight to 60% by weight, 40% by weight to 55% by weight, or 45% by weight to 55% by weight. Specifically, the polyhydroxyalkanoate (PHA) copolymer resin may comprise a 4-hydroxybutyrate (4-HB) repeat unit in an amount of 25% by weight to 50% by weight based on the total weight of the polyhydroxyalkanoate (PHA) copolymer resin.

For example, the polyhydroxyalkanoate (PHA) copolymer resin contained in the first layer may comprise a 4-hydroxybutyrate (4-HB) repeat unit in an amount of 0.1% by weight or more, 5% by weight or more, 10% by weight or more, 12% by weight or more, 13% by weight or more, 15% by weight or more, 17% by weight or more, 18% by weight or more, 20% by weight or more, or 25% by weight or more, and 60% by weight or less, 55% by weight or less, 50% by weight or less, 45% by weight or less, 43% by weight or less, 42% by weight or less, 40% by weight or less, or 35% by weight or less, based on the total weight of the polyhydroxyalkanoate (PHA) copolymer resin, but it is not limited thereto.

The polyhydroxyalkanoate (PHA) resin contained in the first layer may comprise two or more types of a PHA resin, for example, may be a resin in which the first PHA and the second PHA resin are mixed. In addition, the first PHA resin and the second PHA resin may differ from each other in terms of crystallinity. For example, the first PHA resin may comprise an amorphous PHA resin (hereinafter, referred to as an aPHA resin), and the second PHA resin may comprise an aPHA resin or a semi-crystalline PHA resin (hereinafter, referred to as an scPHA resin).

The aPHA resin and the scPHA resin may be distinguished in terms of the content of a 4-HB repeat unit, glass transition temperature (Tg), crystallization temperature (Tc), melting temperature (Tm), or the like. Specific features are as described above.

Fig. 2 shows a cross-sectional view of the side wall of a biodegradable container according to another embodiment.

Referring to Fig. 2, the side wall (10a) of the biodegradable container (1) may comprise a first layer (100) and a second layer (200).

For example, at least one of the first layer (100) and the second layer (200) may comprise a polyhydroxyalkanoate (PHA) resin, and the other layer may comprise a polylactic acid (PLA) resin, a polybutylene succinate (PBS) resin, or a polybutylene adipate-co-terephthalate (PBAT) resin, or a blended resin of at least one thereof.

As a specific example, the side wall of the biodegradable container may comprise a first layer comprising the polyhydroxyalkanoate (PHA) resin and a second layer comprising at least one of the polylactic acid (PLA) resin and the polybutylene succinate (PBS) resin.

The first layer and the second layer may have a thickness ratio of 1:1 to 1:3. Within the above range, it is possible to prevent a decrease in productivity caused by an excessively thin thickness of any one layer, and each layer can perform its intended function more effectively. Specifically, the thickness ratio of the first layer and the second layer may be in the range of 1:1 to 1:2.5, 1:1 to 1:2, 1:1 to 1:1.5, 1:1.5 to 1:3, or 1:2 to 1:3.

Fig. 3 shows a cross-sectional view of the side wall of a biodegradable container according to still another embodiment.

Referring to Fig. 3, the side wall (10a) of the biodegradable container (1) may comprise a first layer (100), a second layer (200), and a third layer (300).

For example, at least one of the first layer (100), the second layer (200), and the third layer (300) may comprise a polyhydroxyalkanoate (PHA) resin, and the other layers may each comprise a polylactic acid (PLA) resin, a polybutylene succinate (PBS) resin, or a polybutylene adipate-co-terephthalate (PBAT) resin, or a blended resin of at least one thereof.

As a specific example, the side wall (10a) of the biodegradable container may comprise a first layer (100) comprising the polyhydroxyalkanoate (PHA) resin, a second layer (200) comprising the polylactic acid (PLA) resin, and a third layer (300) comprising the polybutylene succinate (PBS) resin.

The first layer, the second layer, and the third layer may have a thickness ratio of 1:1:1 to 1:3:3.

### Process for preparing a biodegradable container

The process for preparing a biodegradable container according to the present invention comprises preparing a biodegradable resin composition comprising a biodegradable resin and having a melt flow index of 1.0 g/10 minutes or more when measured at 165°C; and molding a container from the biodegradable resin composition, wherein the biodegradable resin comprises a polyhydroxyalkanoate (PHA) resin, and the polyhydroxyalkanoate (PHA) resin comprises a 4-hydroxybutyrate (4-HB) repeat unit.

The biodegradable container may be prepared using a well-known method such as injection molding and blow molding, which have been conventionally used to prepare small plastic containers.

For example, the molding of the container may be carried out by blow molding at a resin melt temperature of 140°C to 200°C or injection molding at a temperature of 155°C to 230°C.

Specifically, the molding of the container is carried out by blow molding, and the blow molding comprises preparing a parison by melting and extruding the biodegradable resin composition; and placing the parison in a mold and blowing high-pressure air thereinto.

More specifically, the container may be prepared by extrusion blow molding or injection stretch blow molding.

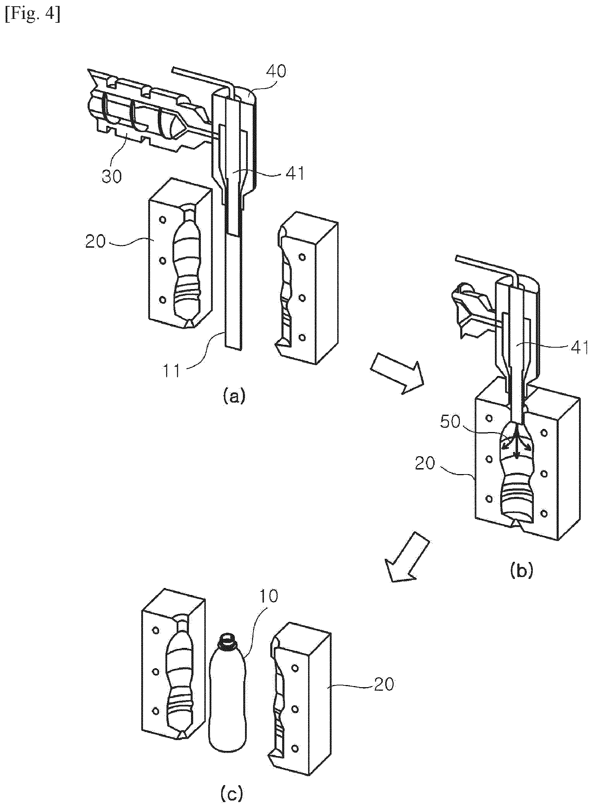

Fig. 4 shows a process for preparing a biodegradable container according to an embodiment using extrusion blow molding.

Referring to Fig. 4, (a) a biodegradable resin composition is melted in an extruder (30) and then injected into a die head (40) by a rotating screw to form a parison (11) around a blow pin (41), (b) two vertically divided molds (20) are combined to surround the blow pin and parison, and compressed air (50) is blown through the blow pin (41) to expand the parison, and, thereafter, the two molds (20) are vertically separated again to release the molded container (10) from the parison.

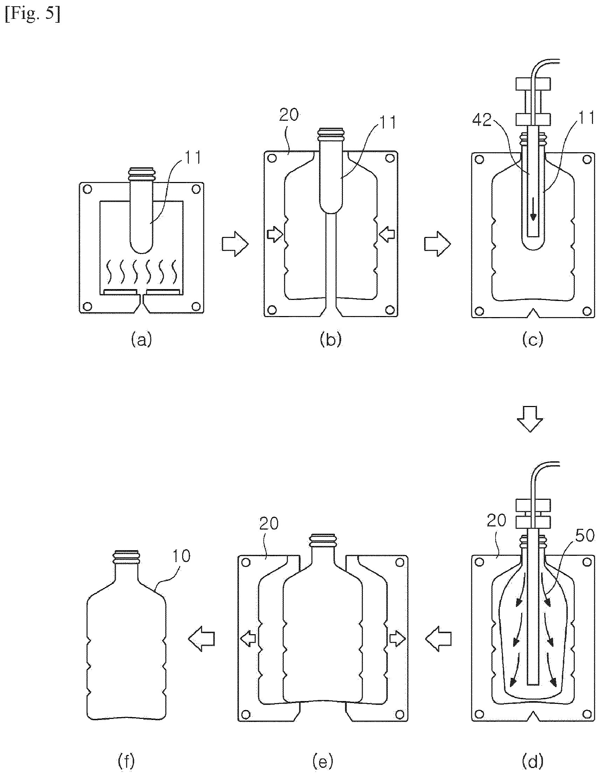

Fig. 5 shows a process for preparing a biodegradable container according to another embodiment using injection stretch blow molding.

Referring to Fig. 5, (a) a parison (11) injection molded from a biodegradable resin composition is preheated, (b) two vertically divided molds (20) are combined to surround the parison (11), (c) a core bar (42) is inserted into the parison (11) and extended downward, (d) compressed air (50) is blown thereinto to expand the parison inside the mold (20), (e) the molds (20) are vertically separated again to release the molded article, and (f) a biodegradable container (10) is finally obtained.

### Additive

The biodegradable resin composition may comprise at least one additive selected from the group consisting of slip agents, antioxidants, crosslinking agents, nucleating agents, fillers, stabilizers, and compatibilizers. For example, the additive may be employed in an amount of 0.5 to 30% by weight based on the total solids weight of the biodegradable resin composition.

In addition, the biodegradable container may comprise at least one additive selected from the group consisting of slip agents, antioxidants, crosslinking agents, nucleating agents, fillers, stabilizers, and compatibilizers.

For example, the biodegradable container is prepared from the biodegradable resin composition. The additive may be employed in an amount of 0.5 to 30% by weight based on the total solids weight of the biodegradable resin composition. The slip agent is an additive for enhancing the slip properties (slippery properties) during extrusion and for preventing extrudate surfaces from sticking to each other.

Any commonly used slip agent may be used as the slip agent as long as the effects of the present invention are not impaired. For example, the slip agent may be at least one selected from the group consisting of erucamide, oleamide, and stearamide.

The slip agent may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids weight of the biodegradable resin composition.

If the content of the slip agent satisfies the above range, the processability, productivity, and moldability may be further enhanced, and it may be more advantageous for achieving the desired effects of the present invention.

The antioxidant is an additive for preventing disintegration by ozone or oxygen, preventing oxidation during storage, and preventing deterioration of the physical properties of a product.

Any commonly used antioxidant may be used as the antioxidant as long as the effects of the present invention are not impaired.

Specifically, the antioxidant may comprise at least one selected from the group consisting of hindered phenol-based antioxidants and phosphite-based (phosphorus-based) antioxidants.

The hindered phenol-based antioxidant may comprise, for example, at least one selected from the group consisting of 4,4'-methylene-bis(2,6-di-t-butylphenol), octadecyl-3-(3,5-di-t-butyl-4-hydroxyphenyl)propionate, pentaerythritol tetrakis[3-(3,5-di-t-butyl-4-hydroxyphenyl)propionate), and 3,9-bis[2-[3-(3-tert-butyl-4-hydroxy-5 - methylphenyl)propionyloxy]-1,1-dimethylethyl]-2,4,8,10-tetraoxaspiro[5.5]undecane.

The phosphite-based (phosphorus-based) antioxidant may comprise, for example, at least one selected from the group consisting of tris-(2,4-di-t-butylphenyl)phosphite, bis-(2,4-di-t-butylphenyl)pentaerythritol-diphosphite, bis-(2,6-di-t-butyl-4-methylphenyl)pentaerythritol-diphosphite, distearyl-pentaerythritol-diphosphite, [bis(2,4-di-t-butyl-5-methylphenoxy)phosphino]biphenyl, and N,N-bis[2-[[2,4,8,10-tetrakis(1,1-dimethylethyl)dibenzo[d,f][1,3,2]dioxyphosphepin-6-yl]oxy]-ethyl]ethanamine.

The antioxidant may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids weight of the biodegradable resin composition.

If the content of the antioxidant satisfies the above range, the physical properties of a product may be enhanced, and it may be more advantageous for achieving the desired effects of the present invention.

The crosslinking agent is an additive for modifying the properties of the PHA and increasing the molecular weight of the resin. Common crosslinking agents may be used as long as the effects of the present invention are not impaired.

For example, the crosslinking agent may be at least one selected from the group consisting of fatty acid esters, natural oil containing an epoxy group (epoxylated), diallyl phthalate, pentaerythritol tetraacrylate, trimethylolpropane triacrylate, pentaerythritol triacrylate, dipentaerythritol pentaacrylate, diethylene glycol dimethacrylate, and bis(2-methacryloxyethyl)phosphate.

The crosslinking agent may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids weight of the biodegradable resin composition.

If the content of the crosslinking agent satisfies the above range, the physical properties of a product may be enhanced, and it may be more advantageous for achieving the desired effects of the present invention.

The nucleating agent is an additive for supplementing or changing the crystallization morphology of a polymer and for enhancing the crystallization (solidification) rate when a melt of the polymer is cooled. In particular, since the PHA resin used in the present invention has a low crystallization rate, the process may not be readily carried out since stickiness is maintained for a long period of time. If the nucleating agent is used to solve this problem, the crystallization rate can be increased to further enhance the processability, moldability, and productivity, and it is possible to effectively achieve the desired physical properties.

Common nucleating agents may be used as long as the effects of the present invention are not impaired.

Specifically, the nucleating agent may be an elemental substance (pure substance), a metal compound comprising a complex oxide, such as carbon black, calcium carbonate, synthetic silicic acid and salts, silica, zinc white, clay, kaolin, basic magnesium carbonate, mica, talc, quartz powder, diatomite, dolomite powder, titanium oxide, zinc oxide, antimony oxide, barium sulfate, calcium sulfate, alumina, calcium silicate, metal salts of organic phosphorus, and boron nitride; a low molecular weight organic compound having a metal carboxylate group, such as a metal salt of octylic acid, toluic acid, heptanoic acid, pelargonic acid, lauric acid, myristic acid, palmitic acid, stearic acid, behenic acid, cerotic acid, montanic acid, melissic acid, benzene acid, p-tert-butylbenzene acid, terephthalic acid, terephthalic acid monomethyl ester, isophthalic acid, and isophthalic acid monomethyl ester; a polymeric organic compound having a metal carboxylate group, such as a salt of a carboxyl group-containing polyethylene obtained by oxidation of polyethylene, a carboxyl group-containing polypropylene obtained by oxidation of polypropylene, a copolymer of an acrylic acid or methacrylic acid and an olefin (e.g., ethylene, propylene, and butene-1), a copolymer of an acrylic or methacrylic acid and styrene, a copolymer of an olefin and maleic anhydride, and a copolymer of styrene and maleic anhydride; a polymeric organic compound, such as an alpha-olefin having 5 or more carbon atoms branched to a carbon atom in position 3 (e.g., 3,3-dimethylbutene-1,3-methylbutene-1,3-methylpentene-1,3-methylhexene-1 and 3,5,5-trimethylhexene-1), a polymer of vinylcycloalkanes (e.g., vinylcyclopentane, vinylcyclohexane, and vinylnorbornane), polyalkylene glycols (e.g., polyethylene glycol and polypropylene glycol), poly(glycolic acid), cellulose, a cellulose ester, and a cellulose ether; phosphoric acid or phosphorous acid and a metal salt thereof, such as diphenyl phosphate, diphenyl phosphite, a metal salt of bis(4-tert-butylphenyl)phosphate, and methylene bis-(2,4-tert-butylphenyl) phosphate; a sorbitol derivative, such as bis(p-methylbenzylidene) sorbitol and bis(p-ethylbenzylidene) sorbitol; and thioglycolic anhydride, p-toluenesulfonic acid, and a metal salt thereof. The nucleating agents may be used alone or in combination thereof.

The nucleating agent may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids weight of the biodegradable resin composition.

If the content of the nucleating agent satisfies the above range, the crystallization rate can be increased to enhance the moldability, and it is possible to further enhance the productivity and processability.

The filler is an additive to increase moldability by increasing the crystallization rate during a molding procedure. Any commonly used filler may be used as the filler as long as the effects of the present invention are not impaired. It may comprise at least one selected from the group consisting of calcium carbonate, such as light or heavy calcium carbonate, silica, talc, kaolin, barium sulfate, clay, calcium oxide, magnesium hydroxide, titanium oxide, carbon black, and glass fibers.

The filler, especially an inorganic filler, may have an average particle size of 0.5 µm to 5 µm. If the average particle size of the inorganic filler is less than 0.5 µm, it is difficult for the particles to be dispersed. If it exceeds 5 µm, the size of the particles becomes excessively large, which may impair the effects of the present invention. The filler may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids weight of the biodegradable resin composition.

If the content of the filler satisfies the above range, it may be more advantageous for achieving the desired effects of the present invention.

The stabilizer is an additive for protecting against oxidation and heat and preventing a color change. Any commonly used stabilizer may be used as the stabilizer as long as the effects of the present invention are not impaired.

Specifically, the stabilizer may be one selected from the group consisting of trimethyl phosphate, triphenyl phosphate, trimethyl phosphine, phosphoric acid, and phosphorous acid.

The stabilizer may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids weight of the biodegradable resin composition.

If the content of the stabilizer satisfies the above range, it may be more advantageous for achieving the desired effects of the present invention.

In addition, the compatibilizer is an additive for imparting compatibility by providing bonding strength between resins.

Any commonly used compatibilizer may be used as the compatibilizer as long as the effects of the present invention are not impaired.

Specifically, the compatibilizer may comprise at least one selected from the group consisting of polyvinyl acetates (PVAc), isocyanates, polypropylene carbonates, glycidyl methacrylates, ethylene vinyl alcohols, polyvinyl alcohols (PVA), ethylene vinyl acetates, and maleic anhydrides.

The compatibilizer may be employed in an amount of 0.01 to 20% by weight, 0.01 to 15% by weight, 0.01 to 12% by weight, 0.01 to 10% by weight, 0.01 to 8% by weight, 0.01 to 5% by weight, for example, 0.2 to 4.5% by weight, for example, 0.2 to 4% by weight, or, for example, 0.5 to 3% by weight, based on the total solids weight of the biodegradable resin composition.

If the content of the compatibilizer satisfies the above range, the physical properties may be enhanced by increasing the compatibility between the resins used, and it may be more advantageous for achieving the desired effects of the present invention.

### Mode for Carrying Out the Invention

Hereinafter, the present invention will be described in more detail with reference to the following examples. But the following Examples are intended to illustrate the present invention, and the scope of the Examples is not limited thereto only.

### Examples and Comparative Examples

Step (1) Preparation of a biodegradable resin composition

The following resins were compounded as shown in Table 1, and additives were added thereto to prepare a biodegradable resin composition.
- 1PHA resin: poly(3-HB-co-4-HB), content ratio of 3-HB:4-HB of 55:45 (weight ratio), aPHA, CJ CheilJedang
- 2PHA resin: poly(3-HB-co-4-HB), content ratio of 3-HB:4-HB of 90:10 (weight ratio), scPHA, CJ CheilJedang
- 3PHA resin: poly(3-HB-co-4-HB), content ratio of 3-HB:4-HB of 94:6 (weight ratio), TM X131A, Kaneka
- PBS resin: polybutylene succinate, Ankor Bioplastics
- PLA resin: polylactic acid, NatureWorks

**[Table 1]**

| | PHA resin (based on PHA resin only, % by weight) | | | 4-HB in PHA (% by weight) | Blending with other resins (based on entire resins, % by weight) | | |
|---|---|---|---|---|---|---|---|
| Item | 1PHA | 2PHA | 3PHA | 4-HB in PHA (% by weight) | PHA | PBS | PLA |
| Ex. 1 | 30 | 70 | - | 20.5 | 100 | - | - |
| Ex. 2 | 30 | 70 | - | 20.5 | 70 | - | 30 |
| Ex. 3 | 30 | 70 | - | 20.5 | 70 | 30 | - |
| Ex. 4 | 50 | 50 | - | 27.5 | 70 | - | 30 |
| C. Ex. 1 | - | - | 100 | - | 100 | - | - |

### Step (2) Preparation of a biodegradable container

The biodegradable resin compositions prepared in step 1 above were each used to prepare a container using a blow molding method. First, the biodegradable resin composition was fed to an extruder and melt-extruded at about 160-170°C to form a parison through a die. The parison was inserted into a mold to form a container and strongly pressed with the mold from both sides. Thereafter, high-temperature, high-pressure air was blown thereinto, and it was then cooled to form the shape of a container. Thereafter, both sides of the mold were opened to take out the formed product, and the flash was removed. As a result, a bottle container with an outer diameter of 35 mm, a height of 9.5 cm, and an opening at the top was obtained.

### Test Example

The biodegradable containers prepared in the Examples and Comparative Examples were each tested as follows.

### (1) Measurement of the melt flow index (MI) of the resin composition

The melt flow index was measured at 165°C and 2.16 kg using the Mflow testing system manufactured by Zwick/Roell in Germany.

### (2) Measurement of the thickness of the side wall of the container

The container was cut at 5 cm from the top, the cut area with a circular cross-section was divided into 4 points at a 90-degree angle, the thickness was measured using a micrometer made by Mitutoyo, Japan, and the average value was calculated.

### (3) Measurement of the compressive strength of the container

Pressure was applied to the container until it was crushed, and the compressive strength was measured using Instron's 34 sc-1 universal test machine.

### (4) Measurement of the moisture permeability of the container

The moisture permeability was measured at 38 ± 0.5°C, 90 ± 2% relative humidity, and 1 atm using Aquatran of Mocon.

### (5) Measurement of the oxygen permeability of the container

The oxygen permeability was measured at 23 ± 0.5°C and 1 atm using Oxtran of Mocon.

### (6) Evaluation of the impact resistance of the container

75 g of water was charged to the container. Then, it was sealed, stored in a refrigerator at 0°C for 24 hours assuming distribution in the winter and taken out, and then allowed to fall freely to measure damage using a drop tester of Lansmont. If it was not damaged, it was marked as ∘. If it was damaged, it was marked as ×.

**[Table 2]**

| | Resin composition | Biodegradable container | | | |
|---|---|---|---|---|---|
| Item | Melt flow index (165°C, 2.16 kg) | Side wall thickness | Compressive Strength | Impact resistance | |
| Item (unit) | Melt flow index (165°C, 2.16 kg) (g/10 minutes) | Side wall thickness (mm) | Compressive Strength (kgf/cm²) | 1m | 1.6 m |
| Ex. 1 | 3 | 1.2 | 10 | ○ | ○ |
| Ex. 2 | 2.7 | 1.2 | 11 | ○ | × |
| Ex. 3 | 3.0 | 1.2 | 8.5 | ○ | × |
| Ex. 4 | 2.9 | 1.2 | 12 | ○ | × |
| C. Ex. 1 | 0.63 | 1.2 | 14 | × | × |

**[Table 3]**

| | Biodegradable container | |
|---|---|---|
| Item | Moisture permeability | Oxygen permeability |
| (unit) | (g/m²·day) | (cc/m²·day) |
| Ex. 1 | 21 | 20 |
| Ex. 2 | 23 | 25 |
| Ex. 3 | 30 | 32 |
| Ex. 4 | 27 | 32 |

As can be seen from Tables 2 and 3 above, the biodegradable containers of Examples 1 to 4 had good compressive strength, moisture permeability, and oxygen permeability. They were not damaged even when free-falling from a height of 1 m. In particular, the biodegradable container of Example 1 was not damaged even when free-falling from a height of 1.6 m.

In contrast, the biodegradable container of Comparative Example 1 was damaged when free-falling from a height of 1 m and 1.6 m; thus, it was not suitable for general use.

## Claims

1. A biodegradable resin composition for a biodegradable container, which comprises a biodegradable resin, wherein the biodegradable resin comprises a polyhydroxyalkanoate (PHA) resin, the polyhydroxyalkanoate (PHA) resin comprises a 4-hydroxybutyrate (4-HB) repeat unit, and the biodegradable resin composition has a melt flow index of 1.0 g/10 minutes or more when measured at 165°C.

2. The biodegradable resin composition according to claim 1, wherein the biodegradable resin further comprises at least one of a polylactic acid (PLA) resin and a polybutylene succinate (PBS) resin.

3. The biodegradable resin composition according to claim 2, wherein the biodegradable resin comprises a resin in which (a) the polyhydroxyalkanoate (PHA) resin and (b) at least one of the polylactic acid (PLA) resin and the polybutylene succinate (PBS) resin are blended at a weight ratio (a:b) of 1:0.1 to 1:2.3.

4. The biodegradable resin composition according to claim 1, wherein the polyhydroxyalkanoate (PHA) resin is a polyhydroxyalkanoate (PHA) copolymer resin that further comprises at least one repeat unit selected from the group consisting of 3-hydroxybutyrate (3-HB), 3-hydroxypropionate (3-HP), 3-hydroxyvalerate (3-HV), 3-hydroxyhexanoate (3-HH), 4-hydroxyvalerate (4-HV), 5-hydroxyvalerate (5-HV), and 6-hydroxyhexanoate (6-HH).

5. The biodegradable resin composition according to claim 4, wherein the polyhydroxyalkanoate (PHA) copolymer resin comprises a 4-hydroxybutyrate (4-HB) repeat unit in an amount of 0.1% by weight to 60% by weight based on the total weight of the polyhydroxyalkanoate (PHA) copolymer resin.

6. A biodegradable container, which comprises a biodegradable resin, wherein the biodegradable resin comprises a polyhydroxyalkanoate (PHA) resin, the polyhydroxyalkanoate (PHA) resin comprises a 4-hydroxybutyrate (4-HB) repeat unit, and the biodegradable container has a compressive strength of 5 kgf/cm² or more.

7. The biodegradable container according to claim 6, wherein the biodegradable container has a moisture permeability of 10 g/m²·atm·day to 30 g/m²·atm·day when measured at 38 ± 0.5°C, 90 ± 2% relative humidity, and 1 atm.

8. The biodegradable container according to claim 6, wherein the biodegradable container has an oxygen permeability of 15 cc/m²·atm·day to 40 cc/m²·atm·day when measured at 23 ± 0.5°C and 1 atm.

9. The biodegradable container according to claim 6, wherein the biodegradable container has a thickness of the side wall of 0.8 mm to 3 mm.

10. The biodegradable container according to claim 9, wherein the side wall of the biodegradable container comprises a first layer comprising a polyhydroxyalkanoate (PHA) resin and a second layer comprising at least one of a polylactic acid (PLA) resin and a polybutylene succinate (PBS) resin.

11. The biodegradable container according to claim 10, wherein the first layer and the second layer have a thickness ratio of 1:1 to 1:3.

12. The biodegradable container according to claim 6, wherein the biodegradable container is used as cosmetic containers, cleanser containers, face wash containers, shampoo containers, rinse containers, body cleanser containers, hotel amenity containers, or disposable containers.

13. A process for preparing a biodegradable container, which comprises:
preparing a biodegradable resin composition comprising a biodegradable resin and having a melt flow index of 1.0 g/10 minutes or more when measured at 165°C; and
molding a container from the biodegradable resin composition,
wherein the biodegradable resin comprises a polyhydroxyalkanoate (PHA) resin, and the polyhydroxyalkanoate (PHA) resin comprises a 4-hydroxybutyrate (4-HB) repeat unit.

14. The process for preparing a biodegradable container according to claim 13, wherein the molding of the container is carried out by blow molding at a resin melt temperature of 140°C to 200°C or injection molding at a temperature of 155°C to 230°C.

15. The process for preparing a biodegradable container according to claim 13, wherein the molding of the container is carried out by blow molding, and the blow molding comprises preparing a parison by melting and extruding the biodegradable resin composition; and placing the parison in a mold and blowing high-pressure air thereinto.
